# EUROPÄISCHE PATENTSCHRIFT

(11) **EP 3 084 561 B1**
(45) Veröffentlichungstag und Bekanntmachung des Hinweises auf die Patenterteilung: **29.11.2017**
(21) Anmeldenummer: 14766908.9
(22) Anmeldetag: 13.09.2014
(51) Int. Cl.: B60K 37/00, G06F 3/0482, G06F 3/01, G06F 3/041

(54) **TASTENLOS BEDIENBARE BEDIENVORRICHTUNG**
OPERATING DEVICE THAT CAN BE OPERATED WITHOUT KEYS
SYSTÈME DE COMMANDE SANS TOUCHES

(30) Priorität: 20.12.2013 DE 102013021931
(43) Veröffentlichungstag der Anmeldung: 26.10.2016
(73) Patentinhaber: Audi AG, 85045 Ingolstadt (DE)
(72) Erfinder: KÜHNE, Marcus, 92339 Beilngries (DE); MÜLLER, Ulrich, 85055 Ingolstadt (DE)
(86) Internationale Anmeldenummer: PCT/EP2014/002482
(87) Internationale Veröffentlichungsnummer: WO 2015/090485

(56) Entgegenhaltungen:
- EP-A1- 2 371 649
- EP-A2- 1 562 102
- WO-A2-02/088824
- DE-A1- 10 236 769

## Beschreibung

Die Erfindung betrifft eine Bedienvorrichtung für ein Gerät, mit welcher ein Benutzer eine Gerätefunktion des Geräts auswählen und hierdurch aktivieren kann. Bei der Bedienvorrichtung wird durch eine Anzeigeeinrichtung ein graphisches Objekt angezeigt, beispielsweise ein Icon oder ein Listeneintrag, welches die Gerätefunktion repräsentiert. Der Benutzer kann dann dieses Objekt auswählen und hierdurch die Gerätefunktion aktivieren. Bei der erfindungsgemäßen Bedienvorrichtung muss der Benutzer weder zum Auswählen des Objekts noch zum Aktivieren der Gerätefunktion eine bestimmte Taste drücken.

Aus der US 2004/0046739 A1 ist hierzu ein Smartphone bekannt, welches ein Gehäuse mit elastischen Wänden aufweist. Hält der Benutzer das Smartphone in der Hand und übt er auf die elastische Wandung Druck aus, so wird dies durch einen Drucksensor des Smartphones erkannt und zum Steuern einer Gerätefunktion des Smartphones genutzt: Graphische Objekte, wie Icons oder Listeneinträge, muss der Benutzer dabei weiterhin über ein Touchscreen des Smartphones mit dem Finger auswählen.

Aus der US 2008/0316181 A1 ist ein Smartphone bekannt, das Drucksensoren an seinem Gehäuse aufweist, welche die Fingerstellung der das Smartphone haltenden Hand erfassen. Der Benutzer kann hier graphische Objekte auf einem Bildschirm über die Fingerstellung am Gehäuse auswählen.

Aus der US 2005/0134570 A1 ist eine Tastatur bekannt, welche anstatt einzelner, beweglicher Tasten ein geschlossenes Gehäuse mit elastischen Gehäusebereichen aufweist, die jeweils als eine Taste fungieren.

Aus der US 2010/0110368 A1 ist eine Datenbrille bekannt, in die ein Berührungssensor integriert ist, der ein Antippen der Datenbrille sensiert.

Aus der DE 101 21 392 A2 ist ein Kraftfahrzeug bekannt, bei welchem blickrichtungsabhängig eine Steuerfunktion ausgewählt wird, die dann von der Bedienperson mittels eines haptischen Bedienelements aktiviert werden kann. Das Bedienelement ist an einem Lenkrad des Kraftfahrzeugs angeordnet. Nachteilig bei dieser Bedienvorrichtung ist, dass der Benutzer seine Fingerstellung während des Fahrens ändern muss, um an dem Lenkrad mit einem Finger auf das Bedienelement drücken zu können.
Aus der US 2010/013491 A1 ist ein Eyetracker bekannt, welcher eine Blickrichtung einer Bedienperson erfasst und eine Trajektorie eines Blickpunktes erfasst, welchen ein Benutzer durch Ändern seiner Blickrichtung über eine Anzeigefläche bewegt.

Aus der WO 02/088824 A2 und aus der EP1562102 A2 sind Vorrichtungen zur Steuerung von Geräten mittels einer Blickrichtung bekannt, bei den mittels einer Blickrichtung eine Steuerfunktion ausgewählt wird und mittels eines haptischen Bedienelements, das vorzugsweise an einem Lenkrad angeordnet ist, die ausgewählte Steuerfunktion dann ausgeführt wird.
Der Erfindung liegt die Aufgabe zugrunde, einem Benutzer bei einem Gerät das zielsichere Auswählen und Auslösen einer Gerätefunktion zu ermöglichen.
Die Aufgabe wird durch die Gegenstände der unabhängigen Patentansprüche gelöst. Vorteilhafte Weiterbildungen der Erfindung ergeben sich durch die Merkmale der abhängigen Patentansprüche.
Durch die erfindungsgemäße wird die Auslösung einer via Eye-Tracking selektierten Gerätefunktion des Geräts über einen Druckaufbau auf ein Gehäuse des Geräts ermöglicht.
Hierzu weist die Bedienvorrichtung des Geräts eine Anzeigeeinrichtung zum Anzeigen eines die Gerätefunktion repräsentierenden graphischen Objekts auf, also beispielsweise eines Icons oder eines Listeneintrags eines Bedienmenüs oder einer Auswahlliste. Zudem weist die Bedienvorrichtung einen Eyetracker zum Erzeugen eines von einer Blickrichtung des Benutzers abhängigen Blickrichtungssignals. Außerdem ist eine Sensoreinrichtung vorgesehen, die dazu ausgelegt ist, in einem vorbestimmten Griffbereich oder Haltebereich zum Halten der Bedienvorrichtung einen Haltedruck zumindest einer Hand des Benutzers zu ermitteln und ein von dem Haltedruck abhängiges Drucksignal zu erzeugen. Eine Steuereinrichtung der Bedienvorrichtung, beispielsweise ein Mikrocontroller oder eine andere Prozessoreinrichtung, ist dazu ausgelegt, dass folgende erfindungsgemäße Verfahren durchzuführen.

Gemäß dem Verfahren zeigt die Anzeigeeinrichtung das graphische Objekt an und der Eyetracker erzeugt das Blickrichtungssignal und die Sensoreinrichtung das Drucksignal. Die Steuereinrichtung überprüft anhand des Blickrichtungssignals, ob der Benutzer das Objekt anblickt. Ist dies der Fall, blickt der Benutzer also auf das Objekt, so wird die Gerätefunktion ausgelöst, falls zusätzlich das Drucksignal ein vorbestimmtes Auslösekriterium erfüllt. Mit anderen Worten braucht der Benutzer nun lediglich das Objekt anzuschauen und zuvor, währenddessen oder danach dann innerhalb des Haltebereichs, über welchen er die Bedienvorrichtung hält, den Haltedruck zu verändern. Dies löst diejenige Gerätefunktion aus, die durch das graphische Objekt repräsentiert wird, das er gerade anblickt.

Durch die Erfindung ergibt sich der Vorteil, dass der Benutzer seine Handstellung nicht ändern muss, während er die Bedienvorrichtung hält und eine Gerätefunktion auswählt. Der Benutzer kann die Bedienvorrichtung also durchgehen am Haltebereich halten und muss nicht umgreifen, um z.B. eine Taste zu betätigen. Eine Variation des Haltedruckes genügt.

Gemäß einer Weiterbildung der Erfindung wird durch die Steuereinrichtung die Anzeigeeinrichtung derart gesteuert, dass die Anzeigeeinrichtung auf der Anzeigefläche ein Markierungselement darstellt. Die Steuereinrichtung positioniert in Abhängigkeit von dem Blickrichtungssignal das Markierungselement auf der Anzeigefläche. Das Markierungselement kann beispielsweise ein Mauszeiger oder ein anderes Zeigerelement sein, das auf das blickrichtungsabhängig auf der Anzeigefläche angeordnet wird. Das Markierungselement kann auch eine Markierung sein, z.B. eine Färbung, mittels welcher dasjenige Objekt versehen oder kenntlich gemacht wird, auf das der Benutzer gerade blickt. So können auf der Anzeigefläche auch mehrere Objekte dargestellt werden, von denen jedes eine von mehreren Gerätefunktionen des Gerätes repräsentiert. Der Benutzer kann dann durch Verschwenken seines Blickes eines der Objekte auswählen. Durch das Markierungselement wird in vorteilhafter Weise dem Benutzer angezeigt, welches der Objekte gerade zur Auswahl mittels des Händedruckes oder Haltedruckes aktiviert werden kann.

Entsprechend einer Weiterbildung ist vorgesehen, dass das Auslösekriterium umfasst, dass der durch das Drucksignal beschriebene oder signalisierte Haltedruck größer als ein vorbestimmter Schwellenwert ist. Hierdurch ergibt sich der Vorteil, dass der Benutzer mit der Hand die Bedienvorrichtung durchgehend innerhalb des Haltebereiches halten kann und dann nur bei Bedarf durch Steigern des Haltedruckes das Auslösesignal zum Auslösen der ausgewählten Gerätefunktion erzeugen kann. Das Auslösekriterium kann z.B. auch ein Muster für den Verlauf des Drucksignal, z.B. zweimaligen Drücken, vorgeben.

Während das Auslösekriterium nicht erfüllt ist, kann der Haltebereich auch für andere Steuerungsaufgaben genutzt werden. So sieht eine Weiterbildung der Erfindung vor, dass die Steuereinrichtung das Blickrichtungssignal zur Objektauswahl nur dann überprüft, also der Eytracker also nur dann wirksam ist, falls die Steuereinrichtung anhand des Drucksignals erkennt, dass der Benutzer überhaupt den Haltebereich mit der Hand berührt. Lässt der Benutzer also den Haltebereich los, so ist auch damit das Eye-Tracking deaktiviert. Zusätzlich oder alternativ zum Drucksignal kann auch anhand eines anderen, von einer Berührung des Haltebereichs abhängigen Berührungssignals der Eyetracker in der beschriebenen Weise gesteuert werden, z.B. durch einen kapazitiven Sensor oder einen Photodetektor oder einen Wärmedetektor.

Zusätzlich oder alternativ dazu kann auch überprüft werden, ob der Benutzer mit der Hand innerhalb des Haltebereichs eine Mindestfläche oder mehr als die Mindestfläche berührt. Hierdurch kann ein zufälliges Auslösen beispielsweise durch Antippen des Haltebereichs beim Verstauen oder Hervorholen der Bedienvorrichtung aus einer Tasche vermieden werden.

Eine andere Weiterbildung des Verfahrens sieht vor, dass die Anzeigeeinrichtung den auf der Anzeigefläche dargestellten Anzeigeinhalt in Abhängigkeit davon verändert, wo der durch das Drucksignal signalisierte Haltedruck innerhalb des Haltebereichs wirkt. Hierdurch kann in vorteilhafter Weise beispielsweise ein Umblättern oder Wechseln oder Scrollen des Anzeigeinhalts mittels des drucksensitiven Haltebereichs gesteuert werden. Der Benutzer kann so beispielsweise mit einem Finger den Druck in einem oberen Teil des Haltebereichs erhöhen und hierdurch beispielsweise ein Blättern oder Scrollen nach oben auslösen und/oder bei Ausüben eines Druckes in einem gegenüberliegenden unteren Bereich des Haltebereichs ein Blättern oder Scrollen nach unten.

Gemäß einer anderen Weiterbildung scrollt die Anzeigeeinrichtung einen auf der Anzeigefläche dargestellten Anzeigeinhalt, falls die Steuereinrichtung anhand des Drucksignals eine Reibbewegung der zumindest einen Hand innerhalb des Haltebereichs erkennt. Der Benutzer kann also beispielsweise mit einem Finger innerhalb des Haltebereichs entlang einer Oberfläche der Bedienvorrichtung streichen und hierdurch den Anzeigeinhalt auf der Anzeigefläche verschieben. So kann beispielsweise eine Liste, die mehr Listeneinträge umfasst als auf der Anzeigefläche darstellbar sind, gescrollt oder verschoben werden.

Weitere Ausführungsformen der Erfindung betreffen die bauliche Ausgestaltung der Bedienvorrichtung. Insbesondere ist der Haltebereich durch eine Gehäusewandung oder einen Überzug z.B. eines Lenkrades bereitgestellt.

Gemäß einer Ausführungsform ist die Anzeigeeinrichtung in einem Gehäuse der Bedienvorrichtung gelagert und der Haltebereich an dem Gehäuse ausgebildet, d.h. durch das Gehäuse selbst dargestellt oder realisiert. Der Benutzer kann so in vorteilhafter Weise die Anzeigeeinrichtung in der Hand halten. Der Haltebereich kann beispielsweise durch eine elastische Gehäusewand realisiert sein, wobei die Sensoreinrichtung zumindest einen Sensor, beispielsweise einen DMS (DMS - Dehnungsmessstreifen) umfasst, welcher das Drucksignal in Abhängigkeit von einer Deformation der Gehäusewand erzeugt.

Gemäß einer anderen Ausführungsform weist die Bedienvorrichtung ein Gehäuse auf, das zwei gegeneinander beweglich gelagerte Gehäuseschalen aufweist. Eine relative Position der Gehäuseschalen zueinander ist dabei von dem Haltedruck abhängig. Beispielsweise können die beiden Gehäuseschalen durch eine Feder auseinandergedrückt sein, so dass bei Zusammendrücken der beiden Gehäuseschalen diese sich gegeneinander verschieben, wobei der Verschiebeweg von dem Haltedruck abhängig ist. Die Sensoreinrichtung ist hierbei dazu ausgelegt, das Drucksignal in Abhängigkeit von einer relativen Lage der Gehäuseschalen zu erzeugen. Die Anzeigeeinrichtung ist insbesondere zwischen den Gehäuseschalen gelagert.

Die erfindungsgemäße Bedienvorrichtung eignet auch sich dazu, unterschiedliche Gerätetypen zu bedienen. Gemäß einer Weiterbildung der Erfindung ist die Bedienvorrichtung in dem Gerät integriert, wobei das Gerät beispielsweise als portables Kommunikationsgerät, also beispielsweise als Smartphone oder Tablet-PC oder PDA (Personal Digital Assistent) oder Notebook ausgestaltet ist. Gemäß einer anderen Weiterbildung ist die Bedienvorrichtung als Kraftfahrzeug ausgestaltet. Beispielsweise kann hierbei der Haltebereich als ein Bestandteil eines Lenkrads des Kraftfahrzeugs ausgestaltet sein und die Anzeigeeinrichtung beispielsweise ein HUD (Head Up Display) und/oder einen Bildschirm beispielsweise in einer Mittelkonsole des Kraftfahrzeugs umfassen. Das Kraftfahrzeug ist hierbei bevorzugt als Kraftwagen, insbesondere als Personenkraftwagen, ausgestaltet. Das Gerät, das mit der Bedieneinrichtung zu bedienen ist, kann z.B. ein Infotainmentsystem des Kraftfahrzeugs und/oder ein Navigationsgerät und/oder eine Medienabspielgerät sein.

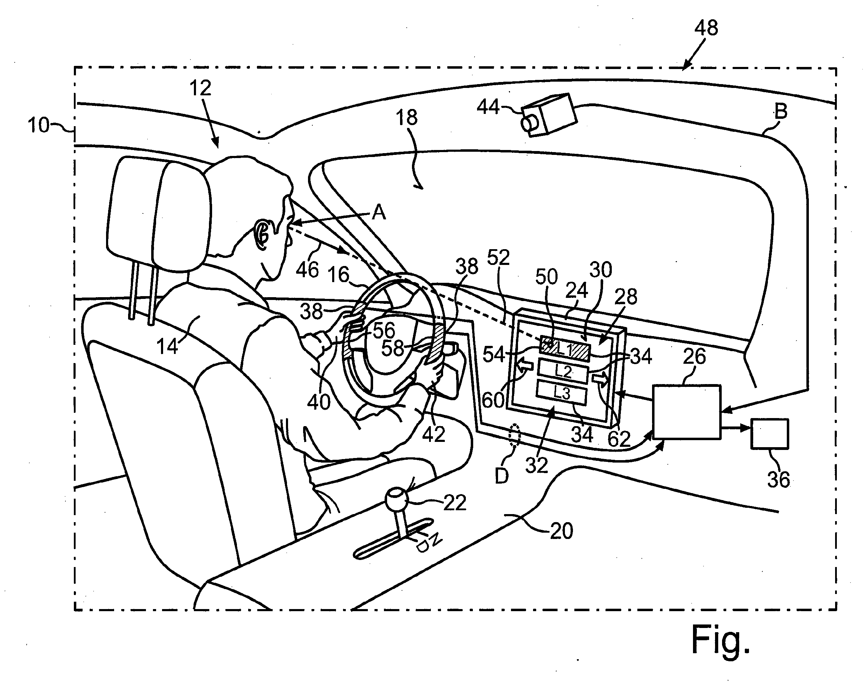

Im Folgenden ist ein Ausführungsbeispiel der Erfindung beschrieben. Hierzu zeigt die einzige Figur (Fig.) eine schematische Darstellung einer Ausführungsform der erfindungsgemäßen Bedienvorrichtung.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In der Fig. ist von einem Kraftfahrzeug 10 ein Fahrgastraum 12 gezeigt. Bei dem Kraftfahrzeug 10 kann es sich beispielsweise um einen Kraftwagen, beispielsweise einen Personenkraftwagen, handeln. Dargestellt sind ein Fahrer 14, ein Lenkrad 16, eine Windschutzscheibe 18, eine Mittelkonsole 20, ein Gangwahlhebel 22 und eine Anzeigeeinrichtung 24. Die Anzeigeeinrichtung 24 kann beispielsweise ein an der Mittelkonsole 20 angeordneter Bildschirm oder beispielsweise auch ein HUD sein. Eine Steuereinrichtung 26 kann einen Anzeigeinhalt 28 steuern, der auf einer Anzeigefläche 30 der Anzeigeeinrichtung 24 dargestellt wird. Die Steuereinrichtung 26 kann beispielsweise einen Mikrocontroller umfassen oder beispielsweise durch ein Programmmodul einer Prozessoreinrichtung des Kraftfahrzeugs 10 realisiert sein.

In dem gezeigten Beispiel ist exemplarisch eine Auswahlliste 32 mit Listenelementen 34 als Anzeigeinhalt 28 angezeigt. Jedes Listenelement 34 stellt ein graphisches Objekt dar, welches jeweils eine Gerätefunktion eines Geräts 36 des Kraftfahrzeugs 10 repräsentiert. Bei dem Gerät 36 kann es sich beispielsweise um ein Infotainmentsystem oder ein Navigationsgerät oder ein anderes, für eine Bedienung über ein Armaturenbrett oder ein Infotainmentsystem des Kraftfahrzeugs 10 ausgelegtes Gerät handeln. Gerätefunktionen können z.B. sein: Navigation, Medienwiedergabe, Telephonie.

Bei dem Kraftfahrzeug 10 muss der Fahrer 14 aber keine Tasten oder andere Knöpfe bedienen, um die gewünschte Gerätefunktion des Geräts 36 zu aktivieren. Der Fahrer 14 kann einfach mit einem Auge A oder beiden Augen auf die Anzeigefläche 30 blicken und hierbei denjenigen Listeneintrag 34 anblicken, der für die gewünschte Funktion steht. In dem Beispiel sei angenommen, dass der Fahrer 14 eine Gerätefunktion aktivieren möchte, die durch den Listeneintrag L 1 repräsentiert ist, beispielsweise das Aktivieren eines CD-Abspielgeräts. Der Fahrer 14 blickt den Listeneintrag L 1 an und drückt einen Haltebereich 38 mit der linken Hand 40 oder der rechten Hand 42, wodurch der angeblickte Listeneintrag L 1 ausgewählt wird, was durch die Steuereinrichtung 26 erkannt wird und die dann die entsprechende Gerätefunktion in dem Gerät 36 aktiviert.

Insgesamt ist somit durch die Steuereinrichtung 26, die Anzeigeeinrichtung 24, den Haltebereich 38 und einen Eyetracker 44, welcher eine Blickrichtung 46 des Auges A oder der beiden Augen des Fahrers 14 erfasst, eine Bedienvorrichtung 48 für das Gerät 36 realisiert. Die Bedienvorrichtung 48 funktioniert dabei insgesamt wie folgt:

Der Eyetracker 44 erzeugt ein Blickrichtungssignal B, das von der Steuereinrichtung 26 empfangen wird. Der Eyetracker 44 kann hierbei in an sich bekannter Weise ausgestaltet sein. Das Blickrichtungssignal B beschreibt die Blickrichtung 46 und/oder einen Blickpunkt 50, welcher beispielsweise einen Schnittpunkt einer durch die Blickrichtung 46 beschriebenen Blickachse 52 mit der Anzeigefläche 30 beschreibt. Die Steuereinrichtung 26 kann den Blickpunkt 50 auf der Anzeigefläche 30 graphisch darstellen, wodurch der Fahrer 14 eine Orientierung erhält. Zusätzlich oder alternativ dazu kann der durch den Blickpunkt 50 markierte Listeneintrag L 1 durch eine Markierung 54 graphisch von den übrigen Listeneinträgen L 2, L 3 oder allgemein den übrigen graphischen Objekten 34 optisch unterschieden werden. Der graphisch dargestellte Blickpunkt 50 und die Markierung 54 bilden hierbei jeweils ein Markierungselement. Der Haltebereich 38 kann eine Sensoreinrichtung mit zumindest einem drucksensitiven Sensor umfassen. Die Sensoreinrichtung erzeugt ein Drucksignal D, welches durch die Steuereinrichtung 26 empfangen wird. Sobald das Drucksignal D ein Auslösekriterium erfüllt, beispielsweise der Druck einer der Hände 40, 42 einen Schwellenwert überschreitet oder der Schwellenwert innerhalb eines vorbestimmten Zeitintervalls zwei Mal hintereinander überschritten wird oder ein anderes vorbestimmtes Muster eines Druckverlaufes des Drucksignals D erkannt wird, so löst die Steuereinrichtung 36 diejenige Gerätefunktion bei dem Gerät 36 aus, die durch denjenigen Listeneintrag L 1, L 2, L 3 repräsentiert wird, der ja gerade vom Fahrer 14 angeblickt wird, hier also den Listeneintrag L 1.

Es kann auch vorgesehen sein, dass der Haltebereich 38 zwei oder mehr Teilbereiche 56, 58 aufweist. Hierbei kann vorgesehen sein, dass für den Fall, dass der Fahrer 14 mit der linken Hand 40 den am Lenkrad 16 in Fahrtrichtung gesehen linken Teilbereich 56 in einer linken Hälfte des Lenkrads 16 drückt, der Anzeigeinhalt 28 verändert wird. Beispielsweise kann die Anzeigeliste 32 in eine Verschieberichtung 60 aus der Anzeigefläche 30 herausgescrollt werden und/oder zu einer anderen Auswahlliste umgeblättert werden. Genauso kann ein Druck mit der rechten Hand 42 auf den rechten Teilbereich 58 zu einem Umblättern oder Scrollen in eine Richtung 62 auslösen. Hierdurch kann der Fahrer 14 durch Drücken des jeweiligen Teilbereichs 56, 58 zu unterschiedlichen Bedienmenüs oder Darstellungen oder allgemein graphischen Objekten 34 wechseln.

Die Steuereinrichtung 26, die Anzeigeeinrichtung 24, der Haltebereich 38 und der Eyetracker 44 können auch anstelle in einem Kraftfahrzeug 10 beispielsweise in einem portablen Kommunikationsgerät, beispielsweise einem Smartphone, integriert sein, dass dann das bediente oder gesteuerte Gerät 36 darstellt. So kann ein Benutzer das Kommunikationsgerät in einer Hand halten. Bei der Interaktion mit diesem Eye-Tracking-basierten Interface des Kommunikationsgeräts erfolgt dann die Selektion beispielsweise aus einem Menü oder eines Listenpunktes mit den Augen. Der Benutzer bestätigt dann die Auswahl über den Druckaufbau auf das Kommunikationsgerät, beispielsweise dessen Gehäuse, falls der Haltebereich 38 an dem Gehäuse realisiert ist. Wird ein Mobile Device, das heißt Kommunikationsgerät, insbesondere eine Smartphone via Blickrichtung bedient, wird der Benutzer es in der Regel in der Hand halten. Zum Bestätigen der Selektion kann der Benutzer deshalb nun einen Menü-/Listenpunkt via Blick fixieren und durch Druckaufbau auf das in seiner Hand gehaltene Gehäuse bestätigen.

Künftig können so auch mobile Geräte (Mobile Devices) im zunehmenden Umfang über Eye-Tracking bedienbar gemacht werden. Bisher ist hierzu nur die Erkennung des fixierten Betrachtungsbereichs möglich. Mittels der Erfindung können zukünftig der konkrete Betrachtungspunkt erkannt werden und der Benutzer kann dann gezielt auf dem Display bestimmte Punkte, beispielsweise Icons, fixieren und bei diesen dann eine Interaktion auslösen. Die konkrete Auslösung der fixierten Funktion kann dabei erfindungsgemäß durch Verändern eines Druckes, insbesondere Erhöhen eines Haltedruckes, in einem Haltebereich der Bedienvorrichtung für das Kommunikationsgerät erfolgen.

Insgesamt ist durch die Erfindung somit bei einem Kraftfahrzeug und einem Kommunikationsgerät das Auslösen einer via Eye-Tracking selektierten Funktion über einen Druckaufbau auf ein Gehäuse oder allgemein einen Haltebereich, ermöglicht.

## Patentansprüche

1. Verfahren zum Betreiben einer Bedienvorrichtung (48) für ein Gerät (36), um eine von einem Benutzer (14) ausgewählte Gerätefunktion des Geräts (36) auszulösen, wobei
- eine Anzeigeeinrichtung (24) auf einer Anzeigefläche (30) ein die Gerätefunktion repräsentierendes graphisches Objekt (34) anzeigt,
- ein Eyetracker (44) ein von einer Blickrichtung (46) des Benutzers (14) abhängiges Blickrichtungssignal (B) erzeugt,
- eine Sensoreinrichtung (38) in einem vorbestimmten Haltebereich (38), über welchen der Benutzer (14) die Bedienvorrichtung (48) mit zumindest einer Hand (40, 42) hält, einen Haltedruck der zumindest einen Hand (40, 42) ermittelt und ein von dem Haltedruck abhängiges Drucksignal (D) erzeugt,
- eine Steuereinrichtung (26) anhand des Blickrichtungssignals (B) überprüft, ob der Benutzer (14) das Objekt (34) anblickt, und in diesem Fall die Gerätefunktion auslöst, falls zusätzlich das Drucksignal (D) ein vorbestimmtes Auslösekriterium erfüllt.

2. Verfahren nach Anspruch 1, wobei die Steuereinrichtung (26) in Abhängigkeit von dem Blickrichtungssignal (B) ein Markierungselement (50, 54) auf der Anzeigefläche (30) positioniert.

3. Verfahren nach einem der vorhergehenden Ansprüche, wobei das Auslösekriterium umfasst, dass der durch das Drucksignal (D) signalisierte Haltedruck größer als ein vorbestimmter Schwellenwert ist.

4. Verfahren nach einem der vorhergehenden Ansprüche, wobei die Steuereinrichtung (26) das Blickrichtungssignal (B) für die Auswahl des Objekts (34) nur überprüft, falls die Steuereinrichtung (26) anhand des Drucksignals (D) und/oder anhand eines anderen, von einer Berührung des Haltebereichs (38) abhängigen Berührungssignals erkennt, dass der Benutzer (14) mit der zumindest einen Hand (40, 42) den Haltebereich (38) berührt, ohne dabei das Auslösekriterium zu erfüllen.

5. Verfahren nach einem der vorhergehenden Ansprüche, wobei die Anzeigeeinrichtung (24) einen auf der Anzeigefläche (30) dargestellten Anzeigeinhalt (28) auf der Grundlage des Drucksignals (D) in Abhängigkeit davon verändert, wo der Haltedruck innerhalb des Haltebereichs (38) wirkt.

6. Verfahren nach einem der vorhergehenden Ansprüche, wobei die Anzeigeeinrichtung (24) einen auf der Anzeigefläche (30) dargestellten Anzeigeinhalt (28) scrollt, falls die Steuereinrichtung (26) anhand des Drucksignals (D) eine Reibbewegung der zumindest einen Hand (40, 42) innerhalb des Haltebereichs (38) erkennt.

7. Bedienvorrichtung (48) für ein Gerät (36), das zumindest eine Gerätefunktion aufweist, mit:
- einer Anzeigeeinrichtung (24) zum Anzeigen eines die Grätefunktion repräsentierendes graphischen Objekts (34),
- einem Eyetracker (44) zum Erzeugen eines von einer Blickrichtung (46) eines Benutzers (14) abhängigen Blickrichtungssignals (B),
- einer Sensoreinrichtung (38), die dazu ausgelegt ist, in einem vorbestimmten Haltebereich (38) zum Halten der Bedienvorrichtung (48) einen Haltedruck zumindest einer Hand (40, 42) zu ermitteln und ein von dem Haltedruck abhängiges Drucksignal (D) zu erzeugen,
- einer Steuereinrichtung (26), die dazu ausgelegt ist, mittels der Anzeigeeinrichtung (24), des Eyetrackers (44) und der Sensoreinrichtung (38) ein Verfahren nach einem der vorhergehenden Ansprüche durchzuführen.

8. Bedienvorrichtung (48) nach Anspruch 7, wobei die Anzeigeeinrichtung (24) in einem Gehäuse der Bedienvorrichtung (48) gelagert ist und der Haltebereich (38) an dem Gehäuse ausgebildet ist.

9. Bedienvorrichtung (48) nach Anspruch 7 oder 8, wobei die Bedienvorrichtung (48) ein Gehäuse aufweist, das zwei gegeneinander beweglich gelagertes Gehäuseschalen aufweist, deren relative Position zueinander von dem Haltedruck abhängig ist, wobei die Sensoreinrichtung (38) dazu ausgelegt ist, das Drucksignal (D) in Abhängigkeit von einer relativen Lage der Gehäuseschalen zu erzeugen.

10. Bedienvorrichtung (48) nach einem der Ansprüche 7 bis 9, wobei
a) die Bedienvorrichtung (48) in dem Gerät (36) integriert ist und/oder
b) die Bedienvorrichtung als portables Kommunikationsgerät oder als Kraftfahrzeug (10) ausgestaltet ist.

## Claims

1. Method for operating an operator control apparatus (48) for a device (36) to initiate a function of the device (36) selected by a user (14), wherein
- a display device (24) displays on a display panel (30) a graphical object (34) representing the device function,
- an eye tracker (44) generates a line-of-vision signal (B) dependent on a line of vision (46) of the user (14),
- a sensor device (38) determines in a predetermined holding region (38) by which the user (14) holds the operator control apparatus (48) with at least one hand (40, 42) a holding pressure of the at least one hand (40, 42) and generates a pressure signal (D) dependent on the holding pressure,
- a control device (26) checks, using the line-of-vision signal (B), whether the user (14) looks at the object (34), and in this case initiates the device function if in addition the pressure signal (D) satisfies a predetermined initiation criterion.

2. Method according to claim 1, wherein the control device (26) positions a marking element (50, 54) on the display panel (30) depending on the line-of-vision signal (B).

3. Method according to any of the preceding claims, wherein the initiation criterion includes that the holding pressure indicated by the pressure signal (D) is greater than a predetermined threshold value.

4. Method according to any of the preceding claims, wherein the control device (26) only checks the line-of-vision signal (B) for selecting the object (34), if the control device (26) recognizes from the pressure signal (D) and/or from another touch signal dependent on a touch to the holding region (38) that the user (14) touches the holding region (38) with the at least one hand (40, 42) without satisfying the initiation criterion.

5. Method according to any of the preceding claims, wherein the display device (24) alters a display content (28) presented on the display panel (30) based on the pressure signal (D) depending on where the holding pressure acts within the holding region (38).

6. Method according to any of the preceding claims, wherein the display device (24) scrolls a display content (28) presented on the display panel (30) if the control device (26) recognizes from the pressure signal (D) a frictional movement by the at least one hand (40, 42) within the holding region (38).

7. Operator control apparatus (48) for a device (36) comprising at least one device function, with:
- a display device (24) for displaying a graphical object (34) representing the device function,
- an eye tracker (44) for generating a line-of-vision signal (B) dependent on a line of vision (46) of a user (14),
- a sensor device (38) configured for determining in a predetermined holding region (38) for holding the operator control apparatus (48) a holding pressure of at least one hand (40, 42) and generating a pressure signal (D) dependent on the holding pressure,
- a control device (26) configured for carrying out a method according to any of the preceding claims by means of the display device (24), the eye tracker (44) and the sensor device (38).

8. Operator control apparatus (48) according to claim 7, wherein the display device (24) is mounted in a housing of the operator control apparatus (48) and the holding region (38) is formed on the housing.

9. Operator control apparatus (48) according to claim 7 or 8, wherein the operator control apparatus (48) comprises a housing with two housing shells, mounted so as to be movable relative to one another and having a relative position in relation to one another dependent on the holding pressure, wherein the sensor device (38) is configured to generate the pressure signal (D) based on a relative position of the housing shells.

10. Operator control apparatus (48) according to any of claims 7 to 9, wherein a) the operator control apparatus (48) is integrated in the device (36), and/or b) the operator control apparatus is configured as a portable communication device or a motor vehicle (10).

## Revendications

1. Procédé pour faire fonctionner un système de commande (48) pour un appareil (36) afin de déclencher une fonction d'appareil de l'appareil (36) sélectionnée par un utilisateur (14), dans lequel
- un dispositif d'affichage (24) affiche sur une surface d'affichage (30) un objet (34) graphique représentant ladite fonction d'appareil,
- un dispositif de suivi de regard (44) génère un signal de direction de regard (B) dépendant d'une direction de regard (46) de l'utilisateur (14),
- un dispositif de détection (38) détermine dans une zone de tenue (38) prédéfinie, par le biais de laquelle l'utilisateur (14) tient le dispositif de commande (48) avec au moins une main (40, 42), une pression de tenue de l'au moins une main (40, 42) et génère un signal de pression (D) dépendant de la pression de tenue,
- un dispositif de commande (26) vérifie à l'aide du signal de direction de regard (B) si l'utilisateur (14) regarde l'objet (34) et, dans ce cas, déclenche la fonction d'appareil si le signal de pression (D) remplit en outre un critère de déclenchement prédéfini.

2. Procédé selon la revendication 1, dans lequel le dispositif de commande (26) positionne un élément de marquage (50, 54) sur la surface d'affichage (30) en fonction du signal de direction de regard (B).

3. Procédé selon l'une quelconque des revendications précédentes, dans lequel le critère de déclenchement comprend le fait que la pression de tenue signalée par le signal de pression (D) est supérieure à une valeur seuil prédéfinie.

4. Procédé selon l'une quelconque des revendications précédentes, dans lequel le dispositif de commande (26) vérifie le signal de direction de regard (B) pour la sélection de l'objet (34) uniquement si le dispositif de commande (26) détecte, à l'aide du signal de pression (D) et/ou à l'aide d'un autre signal de contact dépendant d'un contact avec la zone de tenue (38), que l'utilisateur (14) touche la zone de tenue (38) avec l'au moins une main (40, 42) sans pour autant remplir le critère de déclenchement.

5. Procédé selon l'une quelconque des revendications précédentes, dans lequel le dispositif d'affichage (24) modifie un contenu d'affichage (28) représenté sur la surface d'affichage (30) sur la base du signal de pression (D) en fonction de l'endroit où la pression de tenue agit à l'intérieur de la zone de tenue (38).

6. Procédé selon l'une quelconque des revendications précédentes, dans lequel le dispositif d'affichage (24) fait défiler un contenu d'affichage (28) représenté sur la surface d'affichage (30) si le dispositif de commande (26) identifie à l'aide du signal de pression (D) un mouvement de frottement de l'au moins une main (40, 42) à l'intérieur de la zone de tenue (38).

7. Système de commande (48) pour un appareil (36), qui présente au moins une fonction d'appareil, avec :
- un dispositif d'affichage (24) pour afficher un objet (34) graphique représentant ladite fonction d'appareil,
- un dispositif de suivi de regard (44) pour générer un signal de direction de regard (B) dépendant d'une direction de regard (46) d'un utilisateur (14),
- un dispositif de détection (38) conçu pour déterminer dans une zone de tenue (38) prédéfinie pour la tenue du système de commande (48) une pression de tenue d'au moins une main (40, 42) et générer un signal de pression (D) dépendant de la pression de tenue,
- un dispositif de commande (26) conçu pour mettre en oeuvre, au moyen du dispositif d'affichage (24), du dispositif de suivi de regard (44) et du dispositif de détection (38), un procédé selon l'une quelconque des revendications précédentes.

8. Système de commande (48) selon la revendication 7, dans lequel le dispositif d'affichage (24) est monté dans un boîtier du système de commande (48) et la zone de tenue (38) est formée au niveau du boîtier.

9. Système de commande (48) selon la revendication 7 ou 8, dans lequel le système de commande (48) présente un boîtier qui présente deux coques de boîtier montées de manière mobile l'une par rapport à l'autre, dont la position relative l'une par rapport à l'autre dépend de la pression de tenue, dans lequel le dispositif de détection (38) est conçu pour générer le signal de pression (D) en fonction d'une position relative des coques de boîtier.

10. Système de commande (48) selon l'une quelconque des revendications 7 à 9, dans lequel
a) le système de commande (48) est intégré dans l'appareil (36) et/ou
b) le système de commande est réalisé en tant qu'appareil de communication portable ou en tant que véhicule automobile (10).
